# EUROPEAN PATENT APPLICATION

(11) **EP 1 431 607 A2**
(43) Date of publication of application: **23.06.2004**
(21) Application number: 03104609.7
(22) Date of filing: 09.12.2003
(51) Int. Cl.: F16F 1/38

(54) **Elastomeric bushing**

(30) Priority: 17.12.2002 US 321114
(71) Applicant: THE GOODYEAR TIRE & RUBBER COMPANY, Akron, Ohio 44316-0001 (US)
(72) Inventor: LANDRY, Joseph Raymond, Jr, 45895, Douchequet / Ohio (US)
(74) Representative: Kutsch, Bernd

(57) **Abstract**

An elastomeric bushing (40) for vehicular and non-vehicular applications includes a generally cylindrical body having spaced apart end faces, an axial passageway extending through the body and the end faces, and at least one elongate void (50, 50') formed in a body side and located radially outward from the axial passageway. The void (50, 50') includes opposite lobe end portions (52, 52', 54, 54'), each configured having an elongate major axis (57, 57') and a shorter minor axis (58, 58'). The major axes (57, 57') of the lobe portions are canted in opposite directions away from an imaginary vertical plane therebetween. The void (50, 50') further includes a connective portion (56, 56') between the lobe portions, the connective portion (5, 56') having a concave shape in a radially inward direction that defines a radially outward protruding boss (60). The shape and location of the lobe portions and the boss protrusion are variable to provide combined optimization of the bushing performance among spring rates, articulation durability, and load capacity.

## Description

### Field of the Invention

The invention relates generally to bushings for vehicular and non-vehicular applications and, more specifically, to bushings incorporating at least one void within the bushing body to achieve preferred spring rate, articulation, durability and load capacity objectives.

### Background of the Invention

Elastomeric bushings are in use in a wide range of sizes and myriad vehicular and non-vehicular applications. For example, such bushings may find use as part of a control arm assembly in vehicular suspension systems, as a component in stationary and mobile equipment articulating joint assemblies, or in vehicular and non-vehicular powertrain mounts. In order to accommodate such a wide range of applications having dissimilar performance criteria, it is important for a bushing design to be versatile and flexible. An acceptable bushing configuration must also accommodate radial spring rate differences and provide high durability and high load capacity capability. Some applications, such as in stationary and mobile equipment, require a bushing to provide long life, maintenance free articulation of joints and/or vibration, shock, and noise reduction or isolation. In other applications, the radial spring rate differences in a bushing may be used for refined control.

Elastomeric bushings in their many applications may be unbonded, single bonded, or double bonded to metal or composite material cylindrically mating tubes, shafts, or pins. The bushing in such an assembly may be placed into a state of radial compression within a housing wherein radial forces and stresses are introduced into the bushing member. It is, therefore, desirable that a bushing configuration reduce the stresses (either ultimate strength or fatigue limit related) associated with a rubber to metal bond durability which can affect interface life. Moreover, it is desirable that the bushing configuration reduce rubber strain associated most commonly with fatigue limits that also determines the durability or life characteristics of the rubber. Still further, in unbonded or single bonded applications wherein the bushing is retained within a sleeve or housing, it is desired that a bushing structure optimize the push out or walkout resistance forces that maintain the bushing in its proper position and orientation. Optimization of resistance to push out or walkout generally entails maximizing normal or perpendicular force exerted back onto the outer structure as well as maximizing the bushing-to-structure coefficient of friction.

The performance criteria of preferential spring rates; load carrying capacity; durability; and walkout resistance have made the achievement of a satisfactory bushing structure problematic. A solid toroidal or truncated conical bushing was found lacking in meeting the aforementioned performance needs of the industry. An improved bushing is disclosed in US-A- 5,996,981 (Dilling). The improved bushing incorporates at least one void within the bushing body, the void taking form as an elongate cavity having opposite ends portions and a connective portion extending between the end portions. The void deforms as the bushing is subjected to radial compression until sides of the void mutually engage. Various alternative embodiments of the void configuration are presented in the reference.

While bushings incorporating voids such as those structures disclosed in the '981 Dilling reference work relatively well and represent an advance over the solid bushings in use prior thereto, such bushing structures still do not adequately and optimally meet the performance needs of the industry. In use, state of the art bushings remain susceptible to failure at the bushing rubber to metal interface from stresses introduced into the bushing. The mode of failure is most commonly a failure of either the rubber-to-metal bond as initiated on or near the inner structure or rubber failure commonly manifested as a crack or tear initiated in the zone between the outermost ends or corner of the void(s). Such tears or cracks have been known to traverse to or close to the bond interface or the unbonded surface. In addition, conventional known bushings containing voids configured pursuant to state of the art structure do not achieve a desired level of resistance to push out or walk out in applications requiring such a characteristic.

As a result, the industry remains in need of a void inclusive bushing that: is flexible and versatile in a wide range of applications; provides reduced stress in the rubber to metal bond region; reduces rubber strain that can cause cracks or tears in the bushing and thereby detrimentally shorten bushing life; and provides a high level of resistance to forces that tend to cause bushing walk out or push out.

### Summary of the Invention

The present invention comprises a bushing having one or more voids formed therein of specified geometry and location. In one aspect of the invention, the void is configured elongate having opposite lobe end portions and a medial connective portion. Each lobe end portion is oblong along a major axis and the major axes of the void lobe end portion are canted in opposite directions from an imaginary vertical plane situated therebetween. The performance characteristics of the bushing may be controlled by altering the number, dimensions, geometry, and/or degree of cant of the void(s). Pursuant to another aspect of the invention, connective medial portion is arcuate and at least partially defines an outwardly protruding boss. The geometry, location, and/or dimension of the boss so defined may be varied by a change in the geometry, location, and/or dimensions of the connective portion of the void and the spring characteristics of the bushing may be controlled thereby. The geometry, location, and dimensions of the lobe end portions and the connective portion (and consequently the boss protrusion) of each void may be modified independently or in combination to achieve the optimum performance characteristics desired in the bushing.

### Brief Description of the Drawings

The invention will be described by way of example and with reference to the accompanying drawings in which:
FIG. 1 is a right front perspective view of a prior art bushing having dual void structure incorporated therein;
FIG. 2 is a front elevation view of a second prior art bushing having dual void structure incorporated therein;
FIG. 3 is a right front perspective view of a bushing configured pursuant to the present invention;
FIG. 4 is a front elevation view thereof;
FIG. 5 is a diagrammatic front elevation view thereof;
FIG. 6 is a front elevation view of an alternative bushing configured pursuant to the present invention;
FIG. 7 is a front elevation view of a second alternative bushing configured pursuant to the present invention;
FIG. 8 is a front elevation view of a third alternative bushing configured pursuant to the present invention;
FIG. 9 is a front elevation view of a fourth alternative bushing configured pursuant to the present invention;
FIG. 10 is a front elevation view of a fifth alternative bushing configured pursuant to the present invention;
FIG. 11 is side elevation section view of a bushing configured pursuant to the present invention; and
FIG. 12 is a side elevation section view of an alternative bushing configured pursuant to the present invention.

### Detailed Description of the Preferred Embodiments

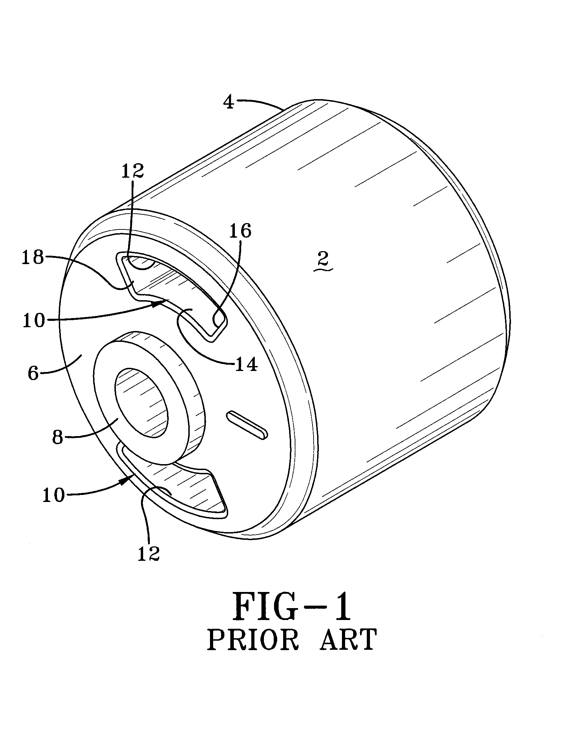

Referring initially to FIG. 1, a prior art elastomeric bushing 2 is shown useful in various applications such as in a suspension assembly for vehicles. The voided bushing 2 represents an advance in performance over prior art solid bushings (not shown) while offering spring rate variability and articulation flexibility. The bushing 2 comprises an elastic generally cylindrical shaped body having radiused sides 4 leading to a face surface 6 at each end. The bushing 2 may be press fit into a structural outer sleeve (not shown) in a manner well known to the art. The bushing 2 is provided with an axial bore having a resident inner structural sleeve 8 disposed therein. The sleeve 8 is rigid and is either friction fitted into the bushing axial passage and is bonded to the bushing body at the peripheral surface of the sleeve by any suitable adhesive, or is rubber cure process bonded in one of various methodologies known in the art. Sleeve 8 extends outward for both ends of the bushing axial passageway and provides means for pivotally attaching bushing 2 to another assembly structure (not shown). Structural sleeve 8 can be formed of any suitably rigid material such as steel.

A pair of spaced-apart voids 10 are formed in each side of the body 2 and comprise a radially inward curving rectangular-shaped cavities. The voids 10 are formed in the top and bottom portions of the front face 6 and extend axially into the bushing 2. The voids undergo a deformation as the bushing 2 is press fit into its outer sleeve and create within bushing 2 desired spring characteristics. More specifically, the bushing has different radial spring rates in perpendicularly opposing vertical and fore-aft directions to accommodate suspension deflection requirements, minimize suspension structural fatigue, while maintaining stable and predictable handling characteristics such as tracking. The differential spring rate is created by the presence of voids such as voids 10 in the FIG. 1 embodiment in an otherwise cylindrical bushing, supported on the inside diameter by the structural sleeve or tube 8 and, in some applications, on the outside diameter by a larger structural metal tube. The voids 10 are defined by opposite void sides 12, 14 and void ends 16, 18.

The bushing is generally radially preloaded (radially compressed) between the structural metal tubes to improve durability. The void shape is changed as the void volume is reduced due to the differential between the bushing outside diameter and the smaller outer structure inside diameter. Durability in the embodiment shown may be satisfactory for some application requirements. In other applications, the limitations of the bushing configuration shown proved unacceptable. For example, vehicle axle load ratings of 18,000 to 30,000 pounds and above are not uncommon. The bushing shown has a durability and capacity that is not sufficient. Maintaining preferential vertical and fore-aft radial spring rates and adequate life characteristics proved problematic.

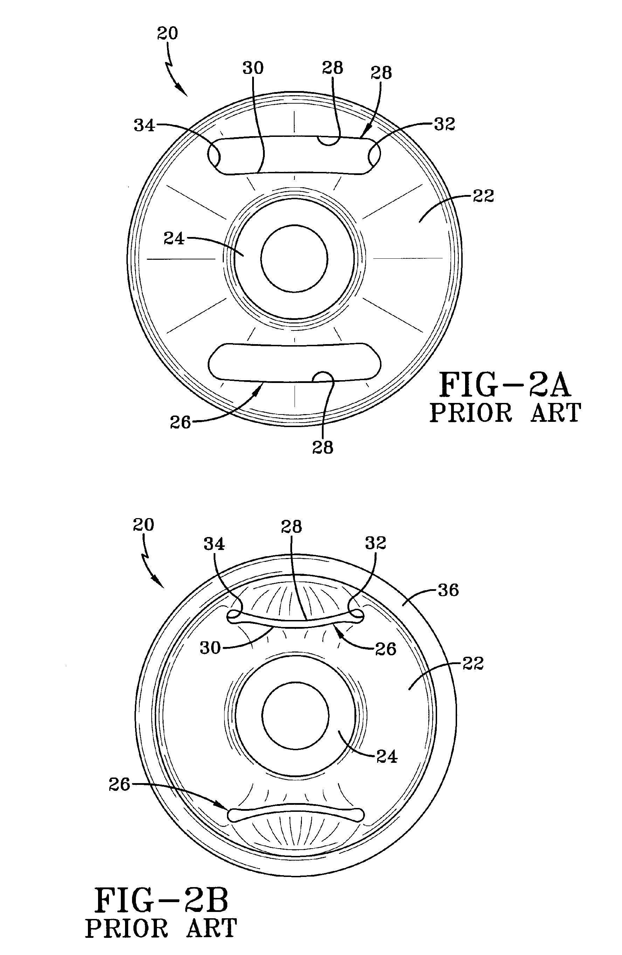

The prior art bushing disclosed in US-A- Patent 5,996,981 and depicted in FIGS. 2A (unloaded) and 2B (loaded) represents a reduced length or compact second generation bushing having a differentiated void configuration. Similar to its predecessor, the bushing 20 shown in FIGS. 2A and 2B includes a forward face 22; an axial inner tube or sleeve 24; and opposite elongate voids 26 defined by void sides 28, 30, and void ends 32, 34. The bushing is press fit within an outer sleeve 36 whereby the voids 26 undergo compressive deformation as shown in FIG. 2B.

Each void 26 is generally a horizontal rectangular slot defined by the radially inwardly disposed linear side 30 and the radially outwardly disposed linear side 28. The end portions 32, 34 are quasi-radiused extensions of the linear sides 28, 30 as shown in FIG. 2A. While the shape and proportion of the void slots 26 of the FIG. 2A and 2B prior art embodiment represents an advance over the FIG. 1 prior art in terms of durability and load carrying capacity, per unit length, the bushing of FIGS. 2A and 2B remain vulnerable to premature cracking and/or bond failure. The failure mode is most commonly a failure of either the rubber-to-metal bond as initiated on or near the inner structure or rubber surface of the bushing, or rubber failure commonly manifested as cracks or tears initiated in the zone between the outermost ends 32, 34 of the voids 26.

The bushing 20, as with the present invention described below, may be used in an unbonded, single bonded, and double bonded assembly. In an unbonded application, the bushing 20 is retained frictionally within sleeve 36. In a single bond application, the bushing 20 is bonded to the center sleeve 24 but not the outer sleeve 36. In a double bonded assembly, the bushing 20 is bonded by conventional adhesives to both the inner and outer sleeves 24, 36. Such variants represent a performance challenge to the versatility of the bushing. Reducing the stresses (either ultimate strength or fatigue limit related) associated with rubber-to-metal bond durability is critical to the bond interface life between the bushing and its inner or outer metal sleeves. Reducing the rubber strain, associated most commonly with fatigue limits, also affects the durability or life characteristics of the rubber. An additional performance constraint is that in the unbonded or single bonded applications, optimization of the push out or walkout resistance forces that maintain the bushing in its proper position and orientation. Such resistance is achieved by optimizing the normal or perpendicular force exerted back onto the outer sleeve 36 together with the structure's coefficient of friction.

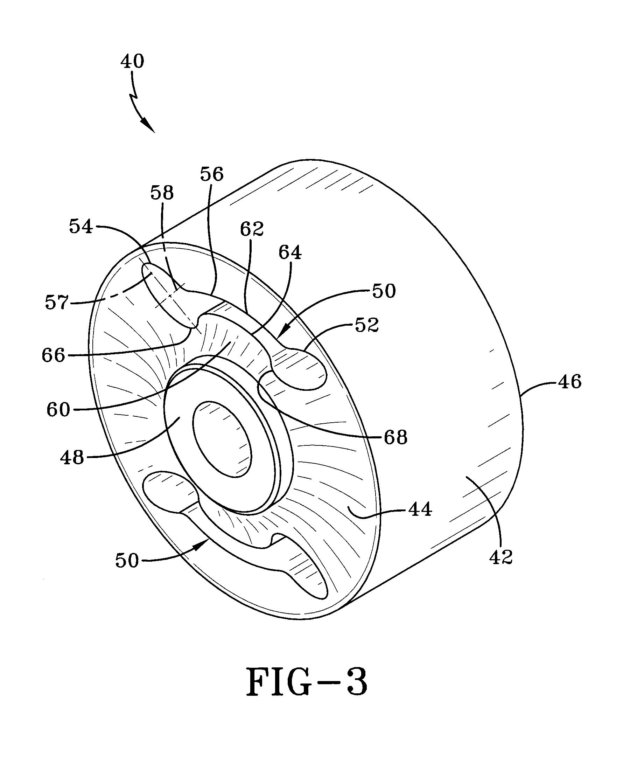

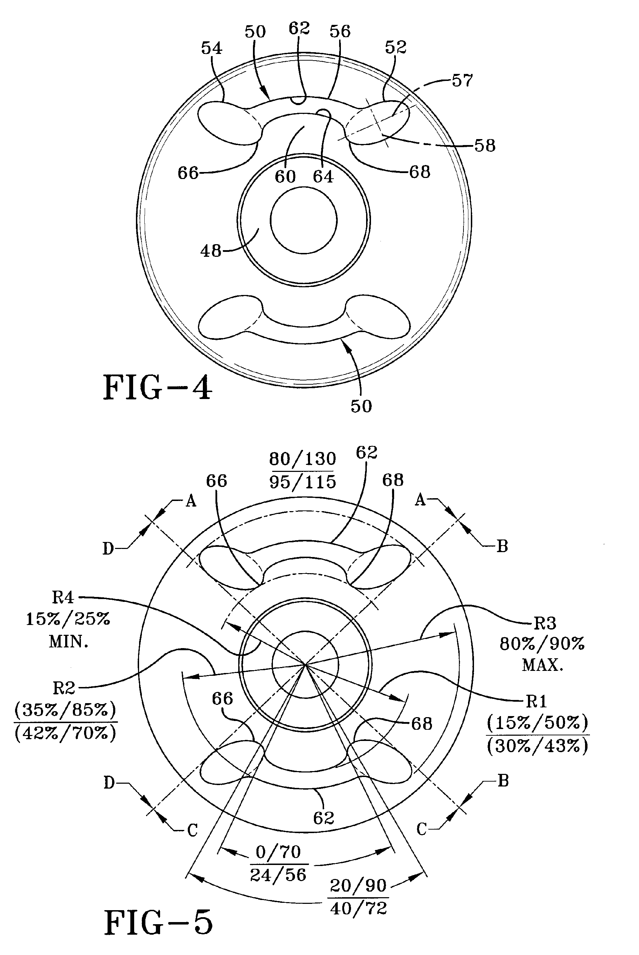

The preferred embodiment of the present invention is shown in FIGS. 3 and 4. The bushing 40 comprises generally cylindrical sides 42, a forward end 44, and a rearward end 46. Preferably, the bushing body is substantially of a truncated conical shape. An axial through passageway extends through the bushing 40 exiting generally centrally from ends 44, 46, the passageway being dimensioned to closely receive in a friction fit an axial metal tube or sleeve 48, or such passageway coincidentally formed and adhered by previously mentioned cure process methodologies. A pair of elongate voids 50 are shown, located at opposite sides of the center axis, each void 50 including opposite lobe-shaped ends 52, 54 and an intermediate connective portion 56. The lobe ends 52, 54 are generally oblong, having a relatively longer major axis 57 than a transverse axial length 58. The lobe ends 52, 54 may be regular and symmetric geometric structures such as an ellipse or an oval, or may be irregular and asymmetrical. In the preferred form, the ends 52, 54 are elliptical. The connective portion 56 of each void 50 is curved or arcuate in a radially inward direction. The radius of curvature of the connective portion 56 will vary according to the performance requirements and the physical dimensions of the bushing. In general, the radial width of the connective void section 56 is less than the longitudinal and circumferential length of each void 50. The connective portion 56 is defined by generally parallel outer surface 62 and inner surface 64. The inward curving connective section 56 and, more specifically surface 64 thereof, defines with inward portions 66, 68 of the lobes 52, 54 an outwardly directed boss 60. The boss 60 extends from the axial centerline of the bushing 40 to the inward side 64 of the lobe connective portion. The radial height of the boss projection 60 relative to the axial length of the bushing is variable, dictated by the distance of the void 50, and hence surface 64, from the axial center line of the bushing and the radius of curvature of the connective portion 56.

In order to understand the function of the void structure 50, the following explanation is provided with collective reference to FIGS. 3-10. In the preferred configuration shown in FIGS. 3, 4, and 5, the voids 50 are separated 180 degrees and symmetrical about a horizontal axis. Each void 50 is further symmetrical about a vertical axis through the bushing. While symmetrical disposition of a pair of voids as shown is preferred, an asymmetrical disposition or more or less than two voids may be deployed if desired. FIG. 4 shows the scaler ratio relationship of the representative preferred void shape relative to the inner metal or composite material structural tube, as well as the outermost diameter of the rubber bushing. The orientation of the voids is most commonly used as shown, with the void symmetrically positioned about the vertical axis. However, the void pair orientation may be rotated to any about the axial centerline, appropriate to articulation requirements, and, under certain circumstances, the voids may not be located at 180 degrees from each other. In other circumstances there may be only one void or, in other occasions, three voids on 120 degree centerlines may be employed.

The face or end view of the bushing can be segmented for explanatory purposes into four zones identified in FIG. 5 as Zones A, B, C, and D. Zones A and C contain the void segments and Zones B and D represent non-voided segments of the bushing. The voided segments A and C each represent a circumferential range of 80 degrees to 130 degrees of the bushing body and preferably a range of 95 degrees to 115 degrees. Zones B and D then range preferentially from 65 degrees to 85 degrees as compliments segments A and C to create the entire bushing body. Within Zones A and C, each void 50 is limited to the subzone of 15 to 90 percent of total rubber thickness as indicated from the innermost rubber radius, and more preferentially positioned in the 25 to 80 percent subzone. Each void 50 is contained in the circumferential range defining the limits of the zones.

As discussed previously, the preferred bushing is most commonly bonded to the inner tube ( a single bonded bushing), then compressively prestrained radially by the insertion of the bushing into an outer sleeve that is smaller than the bushing outside diameter. Alternatively, if originally bonded to both an inner and an outer structure (referred to as a double bonded configuration), that structurally supports both the bushing outside diameter or feature and the bushing inside diameter or feature, it is radially prestrained in compression or down sized in one of multiple manufacturing process approaches. In any asymmetrical orientation or the void pair, or in the case of a single void, the concentricity of the inner-to-outer structural support components will be disturbed, i.e. the eccentricity will increase.

In the preferred embodiment, the radial limiting dimensions for purposes of performance optimization and prestrain residual stability of the solid segments B and D are contained within a range of 25 to 80 percent of the total bushing rubber radial thickness, limited at the minimum by the inside feature (most commonly a diameter) and at the maximum by the rubber outside feature (most commonly a nominal diameter).

Within Zones A and C, each void 50 represents and comprises a portion of the total bushing rubber radial thickness from the inner rubber diameter surrounding inner tube 48 to outer sides 42 of the bushing. The area occupied by each void 50 within segments A and C may range approximately from 25 to 90 percent of the total bushing thickness. Prestrain residual stability of the remaining rubber portions of the bushing will dictate the size of the voids 50 within each segment A and C and the size of segments A and C relative to unvoided segments B and D.

Regarding the shape of each void 50, important circumferential/radial zones (FIGS. 4 and 5) and/or circumferential, radial, length zones are indicated as symmetric about the vertical centerline (FIG. 5 inside of 40/72) and at the circumferential ends of the voids (FIG. 5 inside of 95/115 and outside of 40/72). In the vertical centerline zones (segments A and C), the elastomer features in proximity to the voids provide control of certain vertical force/deflection (spring rate) characteristics, such as specification prescribed linear and nonlinear spring rates. After installation of the bushing within an outer sleeve, the radially protruding rubber boss 60 or inside surface 64 in 0/70 circumferential zone transmit forces radially inward, and in the case of a single bonded version, create bond area stresses. Such stresses and, more specifically the area peak value stresses and stress gradient reductions radiate from such zones, referred to hereinafter as "hot zones". The stresses can be quantified as being in a zone limited by an arc segment ranging from 0 degrees (no boss) to +/- 35 degrees about the centerline. More preferentially, the zone arc segment will be in the range of +/- 12 degrees to +/- 28 degrees, and the boss will have a radially defined height R1 (FIG. 5) ranging from 15 to 50 percent (preferentially 30-43 percent) of the total radial rubber thickness as defined in the unvoided segments B and D. The outer surfaces 62 of the voids 50, as seen in FIG. 5, are symmetrically located and closes to the vertical centerline. The surfaces 62 may by quantified as being in a zone ranging from +/- 10 degrees to +/- 45 degrees, more preferentially +/- 20 to +/- 36 degrees, and with a radially defined range R2 from 35% to 85%, more preferentially 42% to 70% of the total radial rubber thickness.

In the void circumferential end zones, the profile (example, oblong, FIG. 5) and orientation of the voids are dependent on the specification goals and optimization ranking parameters for a given bushing. To achieve the intended objectives of the improved bushing, the pair of voids 50 are nominally canted in opposite directions from a vertical plane disposed therebetween. In addition, as previously, mentioned, the voids are of oblong or lobe shape, preferentially either elliptical or oval and having a longer major axis 57 and a shorter transverse axis 58. It will be understood, therefore, that in the preferred embodiment shown the major axis 57 of each void is canted in opposite directions from the imaginary vertical plane therebetween. To quantify the geometric limits of such void end lobes, confined by the previously described void size and location limitations, the center of the ellipse or oval (as indicated by their centroids) would be limited by those overall constraint limits. The elliptical or oval major/minor axis have a ratio range of from 1.3 to 2.7, more preferentially 1.6 to 2.1. The angle of the major axis of a void to the vertical axis ranges from 60 to 120 degrees, more preferentially 65 to 90 degrees. Within these geometric shape, size, and location constraints, the void ends may be radially spaced within a range R3 of up to ninety percent, more preferentially up to eighty percent of the bushing rubber thickness, but within a range R4 no less than fifteen percent, more preferentially no less than twenty five percent as depicted in FIG. 5.

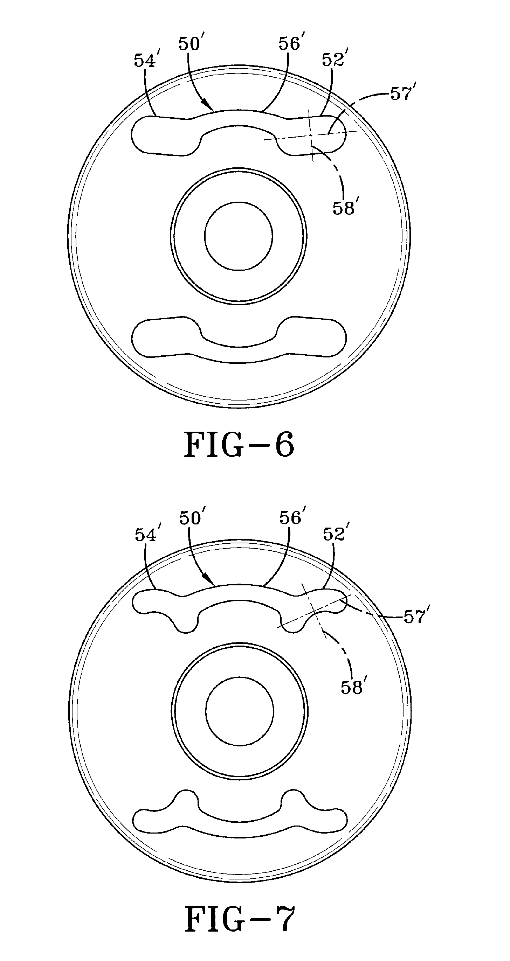

FIG. 6 illustrates an alternative embodiment of the invention and represents an end view of an oval variant in which lobe or end portions 52' and 54' of the void 50' are oblong having a major axis 57' and a transverse, shorter minor axis 58'. The lobes 52', 54' are canted away from an imaginary vertical plane therebetween to a relatively larger degree, approximately 80 degrees. The lobes are thereby substantially oriented in a radial direction.

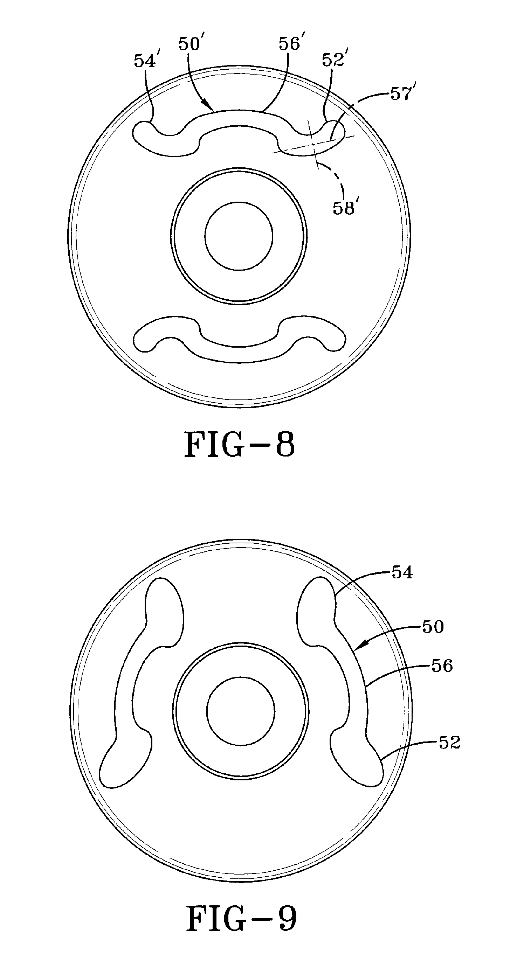

FIG. 7 illustrates a second alternative embodiment of the invention bushing void and represents an end view of a partial elliptical variant. While asymmetrical in geometry, the lobes 52' and 54' are oblong and can be considered to have a major axis 57' and a transverse minor axis 58'. The lobes in FIG. 7 are likewise substantially radially oriented.

FIG. 8 illustrates an end view of a third alternative embodiment of the invention showing a void having oval variant lobes at opposite ends. The lobes 52', 54' likewise are canted away from the vertical plane therebetween and extend substantially radially with respect to the end face of the bushing. Major axis 57' and minor axis 58' are noted.

FIG. 9 shows an end view of yet another, fourth, alternative embodiment in which the voids 50 are at a 150 degree offset and are asymmetrical about the horizontal axis. The voids are configured as described previously having opposite end lobe portions 52, 54 and connective portion 56.

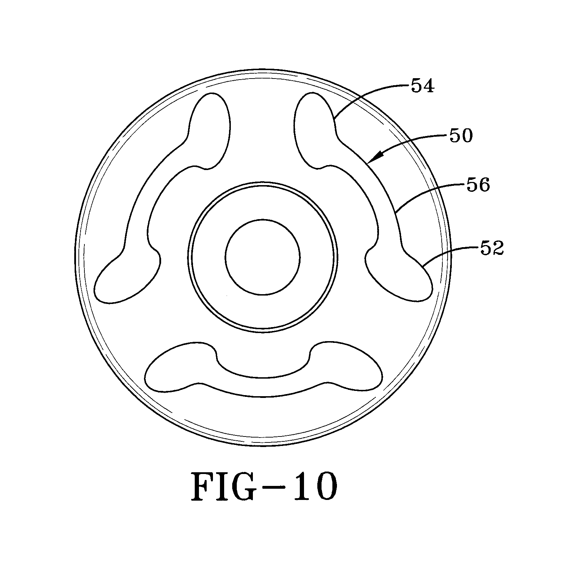

FIG. 10 shows an end view of a fifth alternative embodiment in which three spaced voids are deployed in the bushing. The voids are configured as described previously having opposite end lobe portions 52, 54 and connective portion 56.

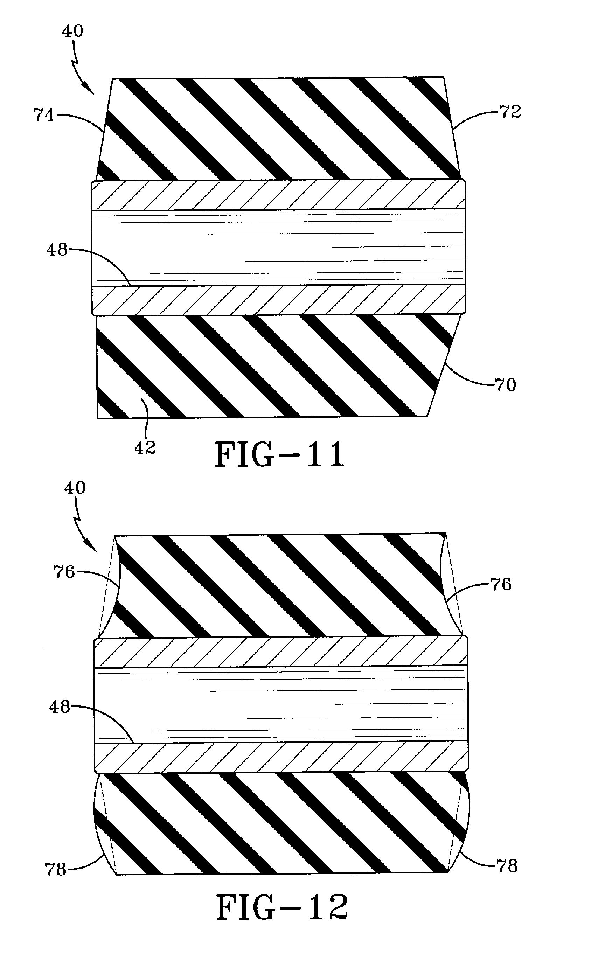

FIG. 11 shows a bushing 40 in profile in which the ends 70, 72, and 74 of the bushing may be formed into a truncate alternative configuration. Another alternative profile is that shown in FIG. 12 in which the ends 76, 78 of the bushing are formed into a concave configuration. The shape and profile of the bushing may accordingly be varied from a straight cylindrical in order to facilitate use of the bushing in applications requiring face bulging profile variance in the installed (within an outer sleeve) condition.

From the foregoing, it will be appreciated that the oblong voids within the bushing as configured pursuant to the invention are outwardly canted relative to a vertical plane to place the longitudinal axis 57 of such void lobe ends in a more radially extending orientation within the bushing. The substantially radial orientation of the void end lobes through the canting of the lobes in mutually opposite directions, as proposed by the invention, is achieved in varying degrees in the preferred embodiment and the alternative embodiments as well. A radial orientation of oblong void end portions allows compressive radial forces on the bushing in the installed condition to be directed normally against the inner sleeve 48. Shear forces upon the bond between the bushing and the sleeve 48 that might otherwise cause the bond to fail are thereby minimized. In addition, the orientation of the oblong ends of the void in a radial direction by canting the lobes as taught above achieves a secondary benefit. The oblong void lobe ends directs reactionary forces through the bushing to the outside diameter and normally against the outside sleeve. Frictional engagement between the bushing and the outside sleeve is thereby optimized, making pull out of the bushing from the sleeve less likely.

It will be further appreciated that the merger of the void end lobes 52, 54 and the arched connective void portion 56 is smooth and radiused as a result of the shape of the void components and the canting of the void lobe ends in the manner taught. Resultantly, the likelihood of cracking or tearing in bushing material surrounding the void portions is minimized in comparison with prior art structure wherein the void configuration is relatively angular. Fatigue and failure of the bushing over time is therefore less likely with the bushing configured pursuant to the invention configuration. Additionally, the canted orientation of the lobe end portions of the voids into substantially radial alignment along the major axis serves to structurally reinforce the bushing in an axial direction. Use and suitability of the bushing in relatively high load applications is thereby facilitated.

The installed busing and , in particular, segment A and C configurations, will vary significantly as a function of both the application and the coefficients of friction of the bushing outside diameter and inside diameter (for unbonded variations) to mating structural surfaces and the coefficient of friction of the end faces to their mating structural surfaces. FIGS. 11 and 12 illustrate several possible alternative bushing end geometries that may be employed. Also, the segment A and C volumetric shape will be dependant on characteristics of the rubber related to tensile, compression, and shear moduli and strength and especially bulk modulus, as it relates to fatigue issues. Common throughout such variations to the A and C volumetric shapes, application of the principles of the present invention in regard to void shape and canted lobe orientation may provide benefit.

## Claims

1. A bushing (40) comprising an elastomeric body having spaced apart sides (42), an axial passageway extending through the body and the sides (42), and at least one elongate void (50, 50') formed in at least one of the body sides and located radially outward from the axial passageway, the void (50, 50') including opposite end portions (52, 52', 54, 54') and a connective portion (56, 56') extending between the end portions (52, 52', 54, 54'), **characterized by** the end portions (52, 52', 54, 54') each being substantially oblong along a major axis (57, 57'), and the major axes (57, 57') of the end portions (52, 52', 54, 54') being canted in opposite directions from an imaginary vertical plane situated therebetween.

2. A bushing (40) comprising an elastomeric body having spaced apart sides (42), an axial passageway extending through the body and the sides (42), and at least one elongate void (50, 50') formed in at least one of the body sides and located radially outward from the axial passageway, the void (50, 50') including opposite end portions (52, 52', 54, 54') and a connective portion (56, 56') extending between the end portions (52, 52', 54, 54'), **characterized by** the connective portion (56, 56') curves in a radially inward direction and at least partially defines an outwardly directed protruding boss (60).

3. A bushing according to claim 1 or 2, wherein the end portions (52, 52', 54, 54') of the void (50, 50') comprise oblong lobes, each having a relatively elongate major axis (57, 57') and a relatively shorter transverse minor axis (58, 58').

4. The bushing according to at least one of the previous claims, wherein each end portion (52, 52', 54, 54') is substantially ovular or substantially elliptical.

5. The bushing according to at least one of the previous claims, wherein the major axis (57, 57') of each said end portion (52, 52', 54, 54') is greater than a transverse minor axis (58, 58') and a ratio of the major axis to minor axis is within a ratio range of 1.3 to 2.7.

6. The bushing according to at least one of the previous claims, wherein the connective portion (56, 56') is at least partially defined by a substantially radially inwardly concave surface that is disposed a radial distance from the body axial passageway.

7. The bushing according to at least one of the previous claims, wherein the connective portion (56, 56') is substantially radially inwardly arcuate and defines at least partially an outwardly directed protruding boss (60).

8. The bushing according to at least one of the previous claims, wherein the dimension of the protruding boss (60) in a radial direction lies within a range of 15 to 50 percent of the radial thickness of the bushing (40).

9. The bushing according to at least one of the previous claims, wherein the major axes (57, 57') of the end portions (52, 52', 54, 54') are canted from the vertical plane at an angle within a range of 65 to 90 degrees.

10. The bushing according to at least one of the previous claims, wherein the major axes (57, 57') of the lobes are canted in opposite directions into a substantially radial orientation, and/or wherein the major axes (57, 57') of the end portions (52, 52', 54, 54') are canted from the vertical plane at an angle within a range of 65 to 90 degrees.
